(19) **Europäisches Patentamt / European Patent Office / Office européen des brevets**

(11) **EP 4 675 527 A1**

(12) **EUROPEAN PATENT APPLICATION**
published in accordance with Art. 153(4) EPC

(43) Date of publication:
**07.01.2026 Bulletin 2026/02**

(21) Application number: **24787847.3**

(22) Date of filing: **07.03.2024**

(51) International Patent Classification (IPC):
**G06Q 10/0639** (2023.01)     **G06F 16/215** (2019.01)

(52) Cooperative Patent Classification (CPC):
**G06F 16/215; G06F 40/18; G06Q 10/0639; G06Q 10/10**

(86) International application number:
**PCT/CN2024/080437**

(87) International publication number:
**WO 2024/212741 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023   CN 202310395811**
         **27.06.2023   CN 202310769133**

(71) Applicant: **Huawei Cloud Computing Technologies Co., Ltd.**
**Guiyang, Guizhou 550025 (CN)**

(72) Inventors:
• **LONG, Jiang**
  **Guiyang, Guizhou 550025 (CN)**
• **HAO, Shiyuan**
  **Guiyang, Guizhou 550025 (CN)**

(74) Representative: **MERH-IP Matias Erny Reichl Hoffmann**
**Patentanwälte PartG mbB**
**Paul-Heyse-Straße 29**
**80336 München (DE)**

(54) **DATA QUALITY MANAGEMENT METHOD AND APPARATUS, AND COMPUTER-READABLE STORAGE MEDIUM**

(57)     A data quality management method and apparatus, and a computer-readable storage medium are provided. The method includes: A computing device obtains a data table input or selected by a user, where quality management is to be performed on the data table, inputs the data table into a data table semantic extraction model, and uses semantics output by the data table semantic extraction model as semantics of the data table. Then, the computing device obtains a task of performing quality management on the data table input or selected by the user, inputs the semantics of the data table and the quality management task into a processing solution generation model, uses a processing solution output by the processing solution generation model as a processing solution of the quality management task, executes the processing solution to obtain a task execution result, and then feeds back the task execution result to the user. This method can help enterprises perform data quality management and effectively improve efficiency of data quality management.

S401
A computing device obtains a first data table input or selected by a user

S402
The computing device inputs the first data table into a data table semantic extraction model, and uses semantics output by the data table semantic extraction model as semantics of the first data table

S403
The computing device obtains a first quality management task input or selected by the user

S404
The computing device inputs the semantics of the first data table and the first quality management task into a processing solution generation model, and uses a processing solution output by the processing solution generation model as a processing solution of the first quality management task

S405
The computing device executes the processing solution of the first quality management task to obtain a task execution result

S406
The computing device feeds back the task execution result to the user

FIG. 4

**EP 4 675 527 A1**

**Description**

This application claims priorities to Chinese Patent Application No. 202310395811.5, filed with the China National Intellectual Property Administration on April 13, 2023 and entitled "DATA QUALITY MANAGEMENT METHOD AND APPARATUS, AND COMPUTER-READABLE STORAGE MEDIUM", and to Chinese Patent Application No. 202310769133.4, filed with the China National Intellectual Property Administration on June 27, 2023 and entitled "DATA QUALITY MANAGEMENT METHOD AND APPARATUS, AND COMPUTER-READABLE STORAGE MEDIUM", both of which are incorporated herein by reference in their entireties.

**TECHNICAL FIELD**

This application relates to the field of data management technologies, and in particular, to a data quality management method and apparatus, and a computer-readable storage medium.

**BACKGROUND**

In the current big data era, data quality issues are attracting increasing attention. These issues are a fundamental data processing task that helps clean data with quality issues, integrate clean data, and provide high-quality data services, but also a prerequisite for enterprises to develop upper-layer applications, explore data value, and make correct decisions. They directly affect social value and economic value that data can bring.

Currently, enterprises mainly manage data quality by manually checking data tables for quality issues and performing data cleaning on the problematic data tables, and the like. This approach is time-consuming, labor-intensive, and inefficient.

**SUMMARY**

This application provides a data quality management method and apparatus, and a computer-readable storage medium, to help an enterprise perform data quality management and effectively improve efficiency of data quality management.

According to a first aspect, a data quality management method is provided, and the method includes the following steps.

A computing device obtains a first data table input or selected by a user, inputs the first data table into a data table semantic extraction model, and uses semantics output by the data table semantic extraction model as semantics of the first data table. Then, the computing device obtains a first quality management task of the first data table input or selected by the user, inputs the semantics of the first data table and the first quality management task into a processing solution generation model, uses a processing solution output by the processing solution generation model as a processing solution of the first quality management task, then executes the processing solution of the first quality management task to obtain a task execution result, and then feeds back the task execution result to the user.

The processing solution generation model is obtained by training an artificial intelligence (artificial intelligence, AI) model by using semantics of a known data table, a second quality management task of the known data table, and a processing solution of the second quality management task.

In the foregoing solution, the first data table input or selected by the user and the first quality management task input or selected by the user are obtained, then the semantics of the first data table and the first quality management task are input into the processing solution generation model to obtain the processing solution of the first quality management task, the processing solution is executed to obtain the task execution result, and finally the task execution result is fed back to the user, to implement quality management on the first data table of the user. It can be learned that in the method, the user only needs to enter or select, on the computing device, a data table on which data quality management is to be performed, and enter or select a quality management task on the computing device, and the computing device performs quality management on the data table based on the quality management task input or selected by the user, and feeds back a quality management result to the user, so that efficiency of data quality management can be improved.

In some possible implementations, the method further includes the following steps: The computing device provides the semantics of the first data table for the user, obtains user-edited semantics of the first data table edited, and fine-tunes the data table semantic extraction model by using the edited semantics of the first data table, to obtain a fine-tuned data table semantic extraction model.

In the foregoing solution, semantics of the data table inferred by the data table semantic extraction model is displayed to the user, and the user determines whether the semantics is accurate. When the user determines that the semantics is inaccurate and performs a modification operation on the semantics, semantics modified by the user may be obtained to optimize the data table semantic extraction model. In this way, precision of the data table semantic extraction model can be improved.

In some possible implementations, the method further includes the following steps: The computing device provides the processing solution of the first quality management task for the user; obtains a user-edited processing solution of the first quality management task; and fine-tunes the processing solution generation model by using the edited processing solution of the first quality management task, to obtain a fine-tuned processing solution generation model.

In the foregoing solution, a processing solution inferred by the processing solution generation model is displayed to the user, and the user determines whether the processing solution is accurate. When the user determines that the processing solution is inaccurate and performs a modification operation on the processing solution, a processing solution modified by the user may be obtained to optimize the processing solution generation model. In this way, precision of the processing solution generation model can be improved.

In some possible implementations, the method further includes the following steps: The computing device obtains a user-edited task execution result; and fine-tunes the processing solution generation model by using the edited task execution result, to obtain a fine-tuned processing solution generation model.

In the foregoing solution, a task execution result obtained by executing the processing solution inferred by the processing solution generation model is displayed to the user, and the user determines whether the task execution result is accurate. When the user determines that the task execution result is inaccurate and performs a modification operation on the task execution result, a task execution result modified by the user may be obtained to optimize the processing solution generation model. In this way, precision of the processing solution generation model can be further improved.

In some possible implementations, the first quality management task includes any one or more of the following: performing anomaly detection on the first data table; scoring quality of the first data table; cleaning the first data table; generating code, a rule, an operator, or a script used to perform anomaly detection on the first data table; generating code, a rule, an operator, or a script used to score the quality of the first data table; and generating code, a rule, an operator, a script, a step, or a pipeline used to clean the first data table.

According to the foregoing implementations, diversified quality management can be performed on the data table of the user.

In some possible implementations, the processing solution of the first quality management task includes any one or more of the following: the code, rule, operator, or script used to perform anomaly detection on the first data table; the code, rule, operator, or script used to score the quality of the first data table; and the code, rule, operator, script, step, or pipeline used to clean the first data table.

According to the foregoing implementations, when quality management is performed on the data table of the user, a processing solution can be displayed to the user in a multi-modal manner (modals such as code, a rule, an operator, or a script), to implement diversified display.

According to a second aspect, a data quality management apparatus is provided, and the apparatus includes:

a first obtaining module, configured to obtain a first data table input or selected by a user;
a semantic extraction module, configured to: input the first data table into a data table semantic extraction model, and use semantics output by the data table semantic extraction model as semantics of the first data table;
a second obtaining module, configured to obtain a first quality management task of the first data table input or selected by the user;
a solution generation module, configured to: input the semantics of the first data table and the first quality management task into a processing solution generation model, and use a processing solution output by the processing solution generation model as a processing solution of the first quality management task, where the processing solution generation model is obtained by training an AI model by using semantics of a known data table, a second quality management task of the known data table, and a processing solution of the second quality management task;
a solution execution module, configured to execute the processing solution of the first quality management task, to obtain a task execution result; and
a result display module, configured to feed back the task execution result to the user.

In some possible implementations, the apparatus further includes:

a semantic display module, configured to provide the semantics of the first data table for the user;
a third obtaining module, configured to obtain user-edited semantics of the first data table; and
a first fine-tuning module, configured to fine-tune the data table semantic extraction model by using the edited semantics of the first data table, to obtain a fine-tuned data table semantic extraction model.

In some possible implementations, the apparatus further includes:

a solution display module, configured to provide the processing solution of the first quality management task for the user;

a fourth obtaining module, configured to obtain a user-edited processing solution of the first quality management task; and

a second fine-tuning module, configured to fine-tune the processing solution generation model by using the edited processing solution of the first quality management task, to obtain a fine-tuned processing solution generation model.

In some possible implementations, the apparatus further includes:

a fifth obtaining module, configured to obtain a user-edited task execution result; and

a third fine-tuning module, configured to fine-tune the processing solution generation model by using the edited task execution result, to obtain a fine-tuned processing solution generation model.

In some possible implementations, the first quality management task includes any one or more of the following: performing anomaly detection on the first data table; scoring quality of the first data table; cleaning the first data table; generating code, a rule, an operator, or a script used to perform anomaly detection on the first data table; generating code, a rule, an operator, or a script used to score the quality of the first data table; and generating code, a rule, an operator, a script, a step, or a pipeline used to clean the first data table.

In some possible implementations, the processing solution of the first quality management task includes any one or more of the following: the code, rule, operator, or script used to perform anomaly detection on the first data table; the code, rule, operator, or script used to score the quality of the first data table; and the code, rule, operator, script, step, or pipeline used to clean the first data table.

For related beneficial effects and descriptions of the data quality management apparatus provided in the second aspect and any implementation of the second aspect, refer to related beneficial effects and descriptions of the first aspect and any implementation of the first aspect. Details are not described herein again.

According to a third aspect, a computing device cluster is provided. The computing device cluster includes a processor and a memory, and the processor is configured to execute instructions stored in the memory, to cause the computing device cluster to implement the method provided in any one of the first aspect or the possible implementations of the first aspect.

According to a fourth aspect, a computer-readable storage medium is provided. The computer-readable storage medium stores instructions, and the instructions are used to implement the method provided in any one of the first aspect or the possible implementations of the first aspect.

According to a fifth aspect, a computer program product is provided and includes a computer program. When the computer program is read and executed by a computing device cluster, the computing device cluster is caused to perform the method provided in any one of the first aspect or the possible implementations of the first aspect.

## BRIEF DESCRIPTION OF DRAWINGS

FIG. 1 is a diagram of a data quality management dimension according to this application;

FIG. 2 is a diagram of a structure of a cloud system according to this application;

FIG. 3 is a diagram of providing a data quality management cloud service for a user by a cloud system according to this application;

FIG. 4 is a schematic flowchart of a data quality management method according to this application;

FIG. 5 is a diagram of a training and inference process of a data table semantic extraction model according to this application;

FIG. 6 is a diagram of a training and inference process of a processing solution generation model according to this application;

FIG. 7 is a diagram of a training and inference process of a quality management knowledge semantic extraction model according to this application;

FIG. 8 shows an example of a graphical user interface according to this application;

FIG. 9 shows an example of another graphical user interface according to this application;

FIG. 10 shows an example of another graphical user interface according to this application;

FIG. 11 shows an example of another graphical user interface according to this application;

FIG. 12 is a diagram of a structure of a data quality management apparatus according to this application;

FIG. 13 is a diagram of a structure of a computing device according to this application;

FIG. 14 is a diagram of a structure of a computing device cluster according to this application; and

FIG. 15 is a diagram of a structure of another computing device cluster according to this application.

## DESCRIPTION OF EMBODIMENTS

The following describes technical solutions of this application with reference to the accompanying drawings.

To make the technical solutions provided in this application clearer, related terms are first explained.

Data quality management is to carry out a series of activities such as identification, measurement, monitoring, and warning on data for data quality issues that may arise during planning, obtaining, storage, sharing, maintenance, and application of the data and in each phase of an entire lifecycle of the data, and improve data quality by improving an organization's management level. An ultimate objective of data management is to increase value of the data in use through reliable data and finally gain more economic benefits for enterprises.

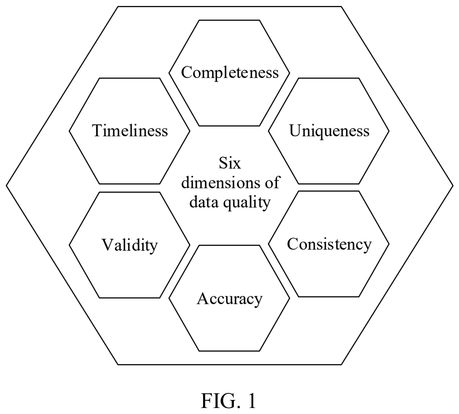

The data management association international (dictionary of data management, DAMA) measures data quality from six dimensions: completeness, uniqueness, consistency, accuracy, validity, and timeliness, as shown in FIG. 1.

① Completeness refers to completeness of data. Tasks for data completeness usually include: (1) incomplete model designs, for example, incomplete uniqueness constraints and references; (2) incomplete data entries, for example, data records are lost or unavailable; and (3) incomplete data attributes, for example, null values in data attributes.

② Uniqueness refers to the absence of duplicate data values for a data item or a group of data. The presence of duplicate data will cause coordination issues in services and traceability problems in processes.

③ Consistency refers to the need for data elements to have consistent and clear types and meanings. Tasks related to data consistency usually include: (1) inconsistent data models of multi-source data, for example, inconsistent names, inconsistent data structures, and inconsistent constraint rules; (2) inconsistent data entities, for example, inconsistent data codes, inconsistent names and meanings, inconsistent classification levels, and inconsistent lifecycles; and (3) a task with inconsistent data and conflicting data content when same data has a plurality of copies.

④ Accuracy means that data needs to reflect actual business content. In other words, the data needs to be correct. For example, salary incomes of employees need to be correct.

⑤ Validity means that a value and a format of data need to meet requirements of a data definition or a service definition, for example, a format of a phone number or email address.

⑥ Timeliness means that data is updated in time based on users' timeliness requirements on information obtaining time.

To resolve a current problem of low efficiency existing when an enterprise performs data quality management, this application provides a data quality management method and apparatus, and a related device. In the data quality management method and apparatus, and the related device provided in this application, a user only needs to enter or select, on a computing device, a data table on which quality management is to be performed, and enter or select a quality management task on the computing device, and the computing device performs quality management on the data table based on the quality management task input or selected by the user, and feeds back a quality management result to the user, so that efficiency of data quality management is improved.

The following separately describes in detail the data quality management method and apparatus, and the related device provided in this application with reference to the corresponding accompanying drawings.

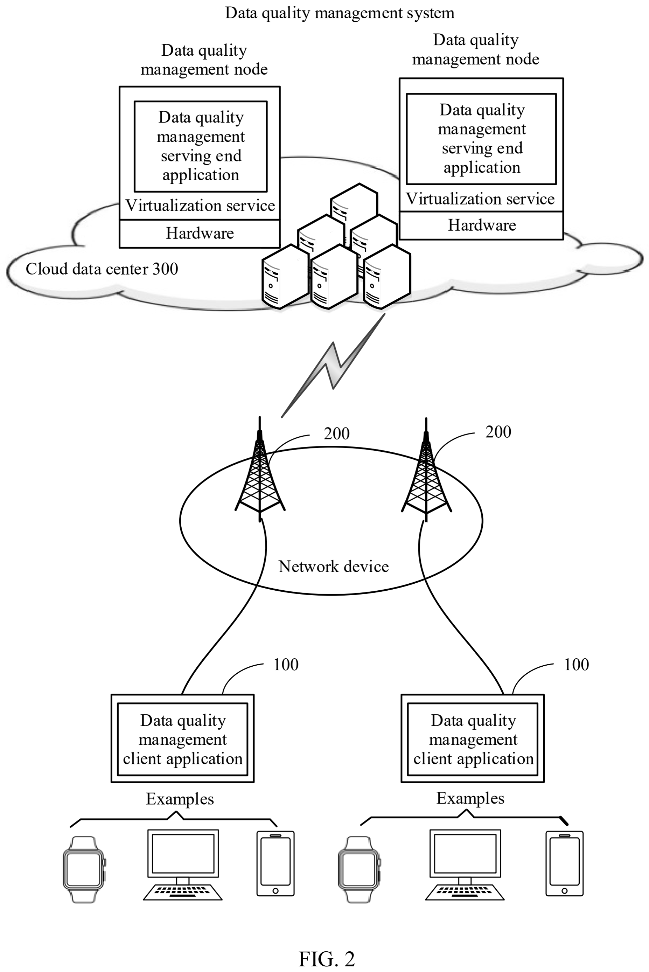

First, a computing device for implementing a data quality management task is described. FIG. 2 is a diagram of a structure of a cloud system according to this application. As shown in FIG. 2, the cloud system includes a terminal device 100, a network device 200, and a cloud data center 300.

The terminal device 100 may be any computing device, for example, a personal computer, a tablet computer, a mobile notebook computer, a smartphone, a palmtop processing device, a virtual reality device, a wearable device, an integrated handheld computer, a personal computer, or a computer workstation. This is not specifically limited in this application.

A user may operate the terminal device 100 to submit a data table on which data quality management is to be performed and a data quality management task to the cloud data center 300.

The network device 200 is configured to transmit data between the terminal device 100 and the cloud data center 300 through a communication network of any communication mechanism/communication standard. The communication network may be in a form of a wide area network, a local area network, a point-to-point connection, or any combination thereof.

The cloud data center 300 may include a plurality of computing devices, and is responsible for performing quality management on the data table of the user based on the data quality management task submitted by the user. The computing device may be a personal computer or a general-purpose physical server, for example, an X86 server or an advanced reduced instruction set computer machine (advanced RISC machine, ARM) server, or may be a cloud-based server, for example, a virtual machine (virtual machine, VM) implemented based on a network functions virtualization (network functions virtualization, NFV) technology. This is not specifically limited in this application.

The cloud data center 300 may be a central cloud data center of a cloud service provider, or may be an edge data center provided by the cloud service provider for the user.

As shown in FIG. 2, the cloud data center 300 may include data quality management nodes. The data quality management nodes may provide a data quality management service for the user, and quality management may be performed on a data table of the user by using the service. As shown in FIG. 2, each data quality management node includes service hardware, a virtualization service, and a serving end.

The service hardware includes a computing resource, a storage resource, and a network resource. The computing resource may use a heterogeneous computing architecture, for example, may use a central processing unit (central processing unit, CPU)+graphics processing unit (graphics processing unit, GPU) architecture, a CPU+AI chip architecture, or a CPU+GPU+AI chip architecture. This is not specifically limited herein. The storage resource may include a memory, a disk, or the like. Herein, the computing resource may be divided into a plurality of computing unit resources, the storage resource may be divided into a plurality of storage unit resources, and the network resource may be divided into a plurality of network unit resources. Therefore, the cloud data center 300 may perform free combination on unit resources based on a resource requirement of the user, to provide a resource based on a requirement of the user. For example, the computing resource may be divided into 5 u computing unit resources, and the storage resource may be divided into 10 G storage unit resources. In this case, combinations of the computing resource and the storage resource may be 5 u+10 G, 5 u+20 G, 5 u+30 u, ..., 10 u+10 G, 10 u+20 G, 10 u+30 u, ....

The virtualization service is a service of pooling resources of a plurality of physical hosts to form a unified resource pool by using a virtualization technology, and flexibly isolating mutually independent resources based on a requirement of the user to run an application of the user. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. In actual application, the virtualization service may alternatively be another lightweight or heavyweight virtualization service. This is not specifically limited herein.

A data quality management serving end application may be used to call hardware to implement the data quality management service.

Specifically, the data quality management serving end application may receive, through the network device 200, the data table on which data quality management is to be performed and that is submitted by the user by using a data quality management client application on the terminal device 100, and receive the data quality management task submitted by the user by using the data quality management client application; then determine a processing solution corresponding to the task based on the data table and the data quality management task that are submitted by the user; execute the processing solution to obtain a task execution result; and finally return the obtained task execution result to the data quality management client application through the network device 200, for presenting to the user, to implement quality management on the data table of the user.

The data quality management task submitted by the user may be a task related to a measurement standard of completeness, uniqueness, consistency, accuracy, validity, and timeliness of a data table, for example, performing anomaly detection on the data table, scoring quality of the data table, cleaning the data table, generating code, a rule, an operator, or a script used to perform anomaly detection on the data table, generating code, a rule, an operator, or a script used to score the quality of the data table, generating code, a rule, an operator, a script, a step, or a pipeline used to clean the data table, correcting abnormal data content in the data table, converting a format of an $N^{th}$ column in the data table, or automatically filling the data table. The data quality management task is not specifically limited in this application.

It can be learned that the data quality management client application is equivalent to an intermediary between the user and the data quality management serving end application, and the data quality management client application and the data quality management serving end application are referred to as a data quality management application.

It should be understood that the cloud system shown in FIG. 2 is merely an example. In actual application, the cloud system may include any quantity of terminal devices 100, network devices 200, and cloud data centers 300, and the cloud system may further include other or more components. FIG. 2 should not be considered as a specific limitation.

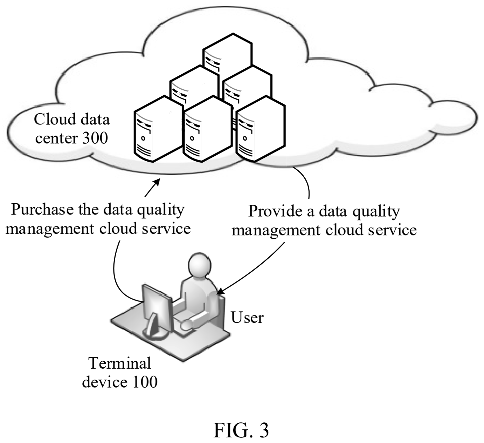

FIG. 3 is a diagram of providing a data quality management cloud service for a user by the cloud system shown in FIG. 2. As shown in FIG. 3, the user may interact with the cloud data center 300 through the terminal device 100, to purchase the data quality management cloud service. After the user purchases the cloud service, the cloud data center 300 may provide the data quality management cloud service for the user. For example, the cloud data center 300 may provide a graphical user interface for the user who purchases the cloud service, the graphical user interface is displayed on the terminal device 100 of the user, and the user performs data quality management on the graphical user interface. A manner of purchasing the data quality management cloud service may include: pre-recharging and then performing settlement based on actual usage of final resources, or performing settlement based on time of using the cloud service or based on a function or a resource of the purchased cloud service.

In some possible implementations, all functions of the cloud system may alternatively be implemented by the terminal device 100. For example, the terminal device 100 implements the data quality management service to provide a service for the user of the terminal device 100, or the terminal device 100 implements the data quality management service to provide a service for a user operating another terminal device.

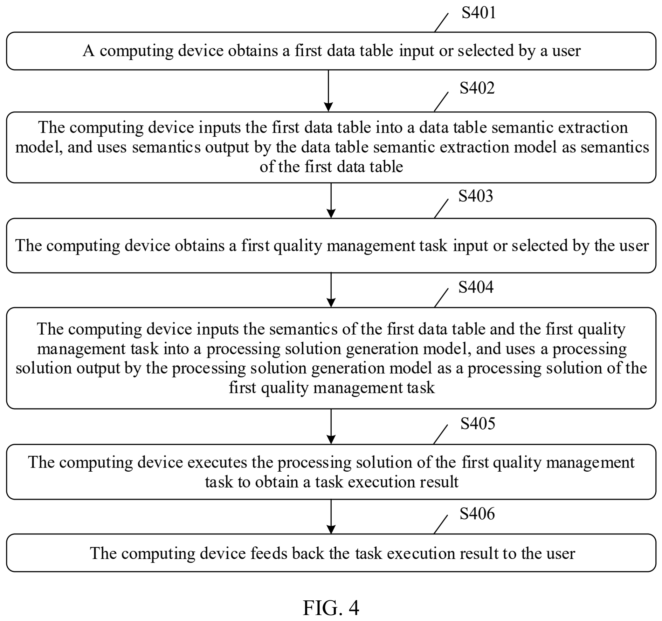

To help understand functions of the cloud system shown in FIG. 2 more clearly, the following provides detailed descriptions based on the data quality management method shown in FIG. 4. As shown in FIG. 4, the method includes the following steps.

S401: A computing device obtains a first data table input or selected by a user.

The computing device may be the computing device in the cloud system shown in FIG. 2, for example, the computing device in the terminal device 100 or the cloud data center 300. For ease of description, in the following embodiments, an example in which the computing device is the computing device in the cloud data center 300 is used.

The first data table may be an employee information table, an employee salary table, an income information table, or an expenditure information table of an enterprise, or may be a student information table, a student transcript, a teacher salary table, or a teacher information table of a school. The first data table may be one or more tables, and a type of the first data table or a quantity of first data tables is not specifically limited in this application.

The computing device may receive a data table uploaded by the user by using a data quality management client application on the terminal device 100. Alternatively, the computing device may prestore one or more data tables of the user. The user may select an identifier of the first data table from identifiers (for example, table names) of the one or more data tables displayed by the data quality management client application on the terminal device 100, and send, to the computing device, a packet that carries the identifier of the first data table. After receiving the packet that carries the identifier of the first data table, the computing device locates the first data table in the one or more data tables based on the identifier of the first data table in the packet, to obtain the first data table selected by the user.

S402: The computing device inputs the first data table into a data table semantic extraction model, and uses semantics output by the data table semantic extraction model as semantics of the first data table.

The semantics of the first data table may be understood as a text description of the first data table. Further, the semantics of the first data table may include semantics corresponding to metadata of the first data table and semantics of data content in the first data table. The metadata of the first data table includes a table name of the first data table, a column name of each column in the first data table, a data type of each column, and the like. The semantics of the metadata of the first data table includes a meaning of the table name of the first data table, a meaning of the column name of each column in the first data table, a description of the data type of each column, a description of a relationship between tables and columns, and the like. The semantics of the data content in the first data table includes semantics of data of each row in the first data table, for example, a meaning of each field in each row, a meaning between every two fields, a meaning between every three fields, ..., and a meaning of all fields.

In a specific embodiment of this application, the data table semantic extraction model may be expressed as:

$$y_1 = f_1(x_1)$$

Herein, $y_1$ is the semantics of the first data table, $x_1$ is the first data table, and $f_1()$ is a mapping relationship between the first data table and the semantics of the first data table.

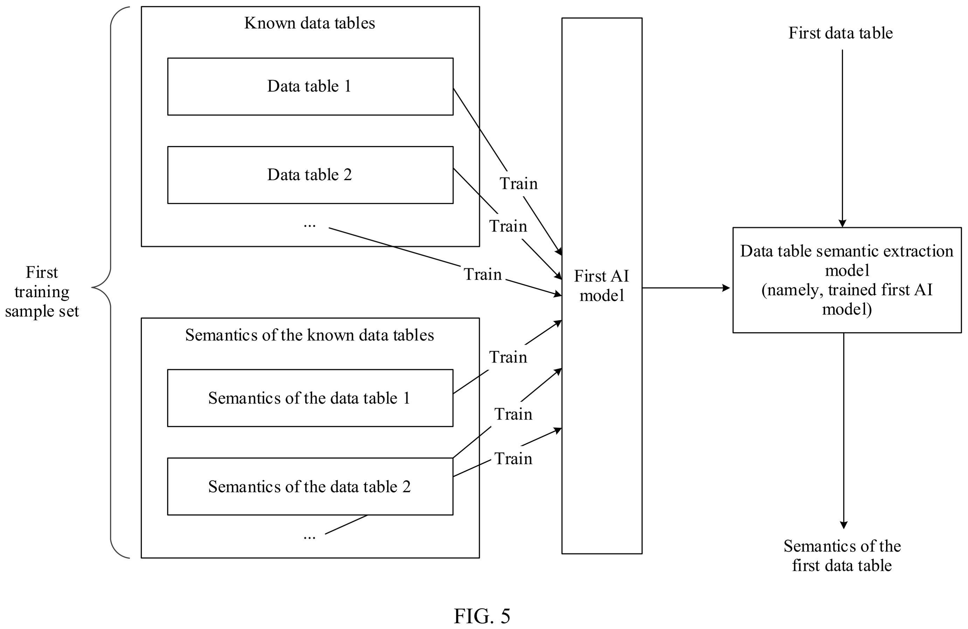

As shown in FIG. 5, the data table semantic extraction model may be obtained by training a first AI model by using a first training sample set including a large quantity of known data tables and semantics corresponding to the large quantity of known data tables. After obtaining the data table semantic extraction model through training, the computing device may perform inference on the first data table by using the data table semantic extraction model, to obtain the semantics of the first data table, as shown in FIG. 5. The first AI model may include but is not limited to a decision tree, a support vector machine, a deep learning model like a generative pre-trained transformer (generative pre-trained transformer, GPT) model, and the like. This is not specifically limited in this application.

The large quantity of known data tables may be historical data tables accumulated in a general field (for example, finance, internet, or mechanical manufacturing). This is not specifically limited in this application.

The semantics of the known data table may be understood as a text description of the known data table. Further, the semantics of the known data table may include semantics corresponding to metadata of the known data table and semantics of data content in the known data table. The metadata of the known data table includes a table name of the known data table, a column name of each column in the known data table, a data type of each column, and the like. The semantics of the metadata of the known data table includes a meaning of the table name of the known data table, a meaning of the column name of each column in the known data table, a description of the data type of each column, a description of a relationship between tables and columns, and the like. The semantics of the data content in the known data table includes semantics of data of each row in the known data table, for example, a meaning of each field in each row, a meaning between every two fields, a meaning between every three fields, ..., and a meaning of all fields.

The following uses an example to describe the semantics of the first data table and the semantics of the known data table. For example, refer to the data table 1 whose table name is company_information.

Table 1 company_information

| company_name | company_province | company_city | company_district | company_registered asset (CNY 10,000) |
|---|---|---|---|---|
| 123 | Zhejiang | Hangzhou | Binjiang | 300.00 |
| 456 | Guangdong | Shenzhen | Nanshan | 1000.00 |
| ... | ... | ... | ... | ... |

Semantics of metadata in the data table 1 may include "the company_information table is a company information table", "the company_information table has five columns", "the company_name column in the company information table is a company name column", "the company_province column in the company information table is a column of a province in which a company is located", "the company_city column in the company information table is a column of a city in which the company is located", "the company_district column in the company information table is a column of a district in which the company is located", "the company_registered asset column in the company information table is a column of a registered asset of the company", and the like.

Semantics of data content in the data table 1 may include "a province in which the company 123 is located is Zhejiang Province", "a city in which the company 123 is located is Hangzhou City, Zhejiang Province", "a district in which the company 123 is located is Binjiang District, Hangzhou City, Zhejiang Province", "a registered asset of the company 123 is CNY 3 million", and the like.

During specific implementation, when the data table semantic extraction model is obtained through training, a feature of the known data table, for example, metadata of the data table, a relationship between metadata of the data table, fields in the data table, and a relationship between the fields in the data table, may be first extracted by using a statistics mining algorithm, an association relationship mining algorithm, or the like. Then, the first AI model is trained by using the feature of the known data table and the semantics of the known data table, to obtain the data table semantic extraction model. A specific training process of the data table semantic extraction model is similar to a training process of the processing solution generation model described below. For details, refer to the following related descriptions. For brevity of the specification, details are not described herein again.

In a possible implementation, after obtaining the semantics of the first data table output by the data table semantic extraction model, the computing device may provide the semantics for the user, and the user may check whether the semantics is accurate. When determining that the semantics is inaccurate, the user may modify the semantics. The computing device may obtain semantics modified by the user, and then fine-tune the data table semantic extraction model by using the modified semantics, to obtain a fine-tuned data table semantic extraction model. In this way, precision of the data table semantic extraction model can be continuously improved.

S403: The computing device obtains a first quality management task input or selected by the user.

The first quality management task entered by the user may be a text description task, or may be a voice form task. When the first quality management task is a voice form task, after receiving the task, the computing device may convert the voice form task into a text description task.

The first quality management task may be a task related to a measurement standard of completeness, uniqueness, consistency, accuracy, validity, and timeliness of the first data table. For example, the first quality management task may include any one or more of the following: performing anomaly detection on the first data table; scoring quality of the first data table; cleaning the first data table; generating code, a rule, an operator, or a script used to perform anomaly detection on the first data table; generating code, a rule, an operator, or a script used to score the quality of the first data table; generating code, a rule, an operator, a script, a step, or a pipeline used to clean the first data table; and correcting abnormal data content in the first data table. It should be understood that the first quality management task is merely used as an example. During specific implementation, the first quality management task may alternatively be another task, for example, performing anomaly detection, performing quality scoring, or generating anomaly detection code. The first quality management task is not specifically limited in this application.

The computing device may receive the first quality management task submitted by the user by using the data quality management client application on the terminal device 100. The computing device may alternatively display a plurality of task templates selectable for the user, for example, performing anomaly detection on the data table, scoring quality of the data table, and cleaning the data table. The user may select one or more templates from the plurality of task templates, and enter the one or more templates to the computing device as the first quality management task.

S404: The computing device inputs the semantics of the first data table and the first quality management task into a processing solution generation model, and uses a processing solution output by the processing solution generation model as a processing solution of the first quality management task.

It is assumed that the first data table is a data table A, semantics of the data table A is A', and the first quality management task is performing anomaly detection on the data table A. In this case, the computing device may input A' and the first quality management task "performing anomaly detection on the data table A" into the processing solution generation model, to obtain a solution that is output by the processing solution generation model and that is used to perform anomaly detection on the data table A, for example, a solution "a dirty_data_discovery.jar package may be used to detect whether an anomaly exists". It is assumed that the first quality management task is detecting whether a format of a date in a "date" column in the data table A is abnormal. In this case, the computing device may input A' and the first quality management task "detecting whether a format of a date in a "date" column in the data table A is abnormal" into the processing solution generation model, to obtain a solution that is output by the processing solution generation model and that is used to perform anomaly detection on the format of the date in the "date" column in the data table A, for example, a solution "an instruction [re.match(r'^\d{4}/\d{2}/\d{2}$',data)] may be used to perform anomaly detection on the date in the "date" column". It is assumed that the first quality management task is cleaning the data table A and displaying a cleaning process. In this case, the computing device may input A' and the first quality management task "cleaning the data table A and displaying a cleaning process" into the processing solution generation model, to obtain a solution output by the processing solution generation model for cleaning the data table A, for example, a solution "the following steps: ① Use the sql script to perform uniqueness verification on an NSS value; and ②..., may be referred to clean the data table A".

The following describes the processing solution generation model in detail.

In a specific embodiment of this application, the processing solution generation model may be expressed as:

$$y = f(x)$$

Herein, $y$ is the processing solution of the first quality management task, $x$ is the semantics of the first data table and the first quality management task, and $f()$ is a mapping relationship between the semantics of the first data table, the first quality management task, and the processing solution of the first quality management task.

The processing solution generation model may be obtained by training a second AI model by using a second training sample set including semantics of a large quantity of known data tables, a quality management task of the known data table, and a processing solution of the quality management task of the known data table. The second AI model may include but is not limited to a decision tree, a support vector machine, a deep learning model like a GPT model, and the like. This is not specifically limited in this application. To distinguish the quality management task of the known data table from the first quality management task, the quality management task of the known data table is referred to as a second quality management task below.

The second quality management task may be a task related to a measurement standard of completeness, uniqueness, consistency, accuracy, validity, and timeliness of the known data table. For example, the second quality management task may include any one or more of the following: performing anomaly detection on the known data table; scoring quality of the known data table; cleaning the known data table; generating code, a rule, an operator, or a script used to perform anomaly detection on the known data table; generating code, a rule, an operator, or a script used to score the quality of the known data table; generating code, a rule, an operator, a script, a step, or a pipeline used to clean the known data table; and correcting abnormal data content in the known data table. It should be understood that the second quality management task is merely used as an example. During specific implementation, the second quality management task may alternatively be another task, for example, performing anomaly detection, performing quality scoring, or generating anomaly detection code. The first quality management task is not specifically limited in this application.

A processing solution of the second quality management task may be a solution described in a text form. For example, the second quality management task is performing anomaly detection on a known data table 1. The processing solution of the second quality management task may be "a dirty_data_discovery.jar package may be used to detect whether an anomaly exists", "a rule... may be used to determine whether there is an abnormal problem", and the like. For example, the second quality management task is cleaning the known data table 1. The processing solution of the second quality management task may be "the following steps: ① Use the sql script to perform uniqueness verification on an NSS value; and ②..., may be referred to clean data", "an instruction... may be executed to perform cleaning", and the like.

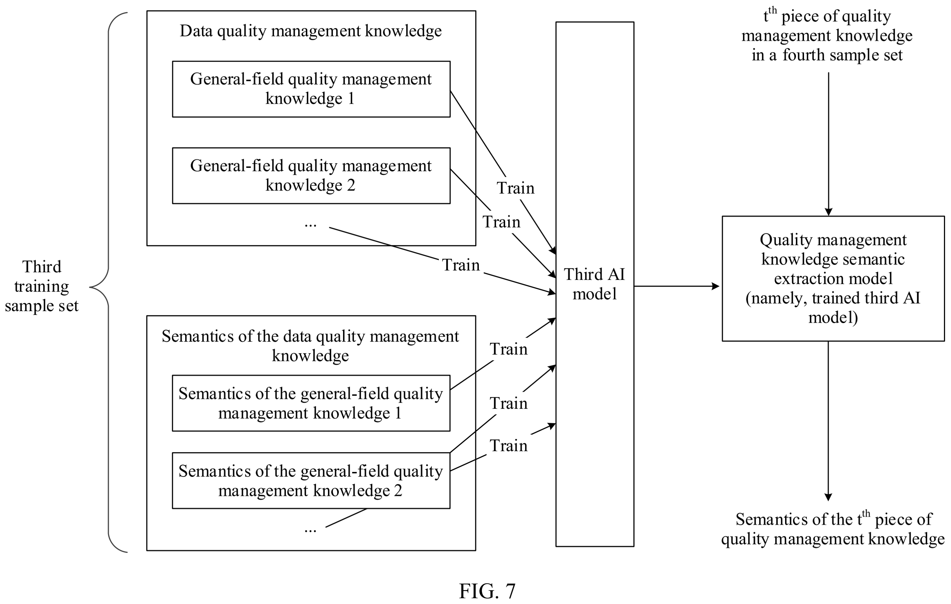

In a possible implementation, the processing solution of the second quality management task may be obtained in the following manner: Data quality management knowledge accumulated in the general field, such as a data quality management rule, operator, code, and script, may be obtained, then a part of the data quality management knowledge is used as a third training sample set, lexical parsing, syntax parsing, and semantic parsing are performed on each piece of data quality management knowledge in the third training sample set to obtain semantics of each piece of data quality management knowledge (which may also be referred to as a function description of the data quality management knowledge), the obtained semantics of each piece of data quality management knowledge is also added to the third training sample set, and then a third AI model is trained by using the data quality management knowledge and the semantics corresponding to the data quality management knowledge in the third training sample set to obtain a quality management knowledge semantic extraction model, as shown in FIG. 7. The third AI model may include but is not limited to a decision tree, a support vector machine, a deep learning model like a GPT model, and the like. This is not specifically limited in this application.

A data quality management instruction "re.match(r'^\d {4}/\d{2}/\d{2}$',data)" is used as an example. Semantics of the instruction obtained by analyzing the instruction may be "an instruction [re.match(r'\d{4}/\d{2}/\d{2}$',data)] is used to detect data with an abnormal date format". A data quality management script "dirty_data_discovery.jar" is used as an example. Semantics of the script obtained by analyzing the script may be "dirty_data_discovery.jar is used to perform anomaly detection on a data table". A training process of the quality management knowledge semantic extraction model is similar to the training process of the processing solution generation model described above. For details, refer to the foregoing related descriptions. For brevity of the specification, details are not described herein again.

After the quality management knowledge semantic extraction model is obtained, as shown in FIG. 7, each piece of quality management knowledge in the remaining part of quality management knowledge (namely, a fourth sample set shown in FIG. 7) other than the data quality management knowledge in the third training sample set in the obtained data quality management knowledge accumulated in the general field may be input into the quality management knowledge semantic extraction model, and an output of the model is semantics of the quality management knowledge.

Optionally, after obtaining the semantics that is of each piece of data quality management knowledge and that is output by the quality management knowledge semantic extraction model, the computing device may further feed back the semantics to personnel responsible for training the quality management knowledge semantic extraction model, and the personnel determines accuracy of the semantics. If the personnel consider that the semantics is inaccurate, the personnel may modify the semantics. The computing device may obtain semantics modified by the personnel, and then optimize the quality management knowledge semantic extraction model by using the modified semantics, to obtain an optimized quality management knowledge semantic extraction model. In this way, precision of the quality management knowledge semantic extraction model can be improved.

After semantics of a large amount of data quality management knowledge is obtained, for each known data table and a second quality management task corresponding to the known data table in a training sample, data quality management knowledge that can be used to process the second quality management task may be determined from the semantics of the large amount of data quality management knowledge, and then, a processing solution corresponding to the second quality management task is obtained based on semantics of the data quality management knowledge. For example, the second quality management task is detecting whether data in a date format in the known data table 1 is abnormal. In this case, it may be determined that data quality management knowledge used to process the second quality management task includes the instruction [re.match(r'^\d{4}A\d{2}/\d{2}$',data)], and then, the processing solution of the second quality management task "the instruction [re.match(r'^\d{4}/\d{2}/\d{2}$',data)] may be used to perform anomaly detection on the data in the date format" is obtained. In this way, the processing solution of the second quality management task is obtained.

It should be understood that the second quality management task and the processing solution of the second quality management task are merely examples. During specific implementation, the second quality management task may alternatively be another task, and the processing solution of the second quality management task may alternatively be another solution. The second quality management task and the processing solution of the second quality management task are not specifically limited in this application.

After the second training sample set including the semantics of the large quantity of known data tables, the second quality management task of the known data table, and the processing solution of the second quality management task is obtained, specifically, the processing solution generation model may be obtained through training in the following manner: A $j^{th}$ semantics in a plurality of semantics of an $i^{th}$ known data table and a second quality management task corresponding to the $j^{th}$ semantics in the second training sample set are used as an input data sample $S_{ij}$, and a processing solution of the second quality management task is used as an output data sample $W_{ij}$, a large quantity of input data samples and a large quantity of output data samples may be obtained through the foregoing combination, and there is a one-to-one correspondence between the large quantity of input data samples and the large quantity of output data samples.

After the large quantity of input data samples and the large quantity of output data samples are obtained, the large quantity of input data samples may be sequentially used as inputs of the second AI model, an output data sample corresponding to each input data sample is used as a reference for an output value of the second AI model, a loss value between the output value of the second AI model and the output data sample is calculated by using a loss function, and then a parameter of the second AI model is adjusted based on the loss value. During specific implementation, the second AI model may be iteratively trained by using the large quantity of input data samples and the large quantity of output data samples, to continuously adjust the parameter of the second AI model until the second AI model can accurately output, based on the input data sample, an output value that is the same as the output data sample corresponding to the input data sample, to obtain a trained processing solution generation model.

It should be understood that the foregoing process of obtaining the processing solution generation model through training is merely an example, and should not be considered as a specific limitation. For example, during specific implementation, training samples in the second training sample set may be first classified, for example, the second quality management task is classified into an anomaly detection task, a quality scoring task, a data cleaning task, a mixed task, and the like based on a type of the second quality management task, and then the second AI model is trained by using a multi-task learning (multi-task learning, MTL) method, to obtain a processing solution generation model that can implement both multi-task independent inference and mixed task inference. The training process of the processing solution generation model is not specifically limited in this application. The mixed task is a task obtained by combining a plurality of second quality management tasks. For example, a quality management task A "performing anomaly detection on a data table" and a quality management task B "cleaning the data table" are combined to obtain a mixed task "performing anomaly detection and cleaning on the data table".

S405: The computing device executes the processing solution of the first quality management task to obtain a task execution result.

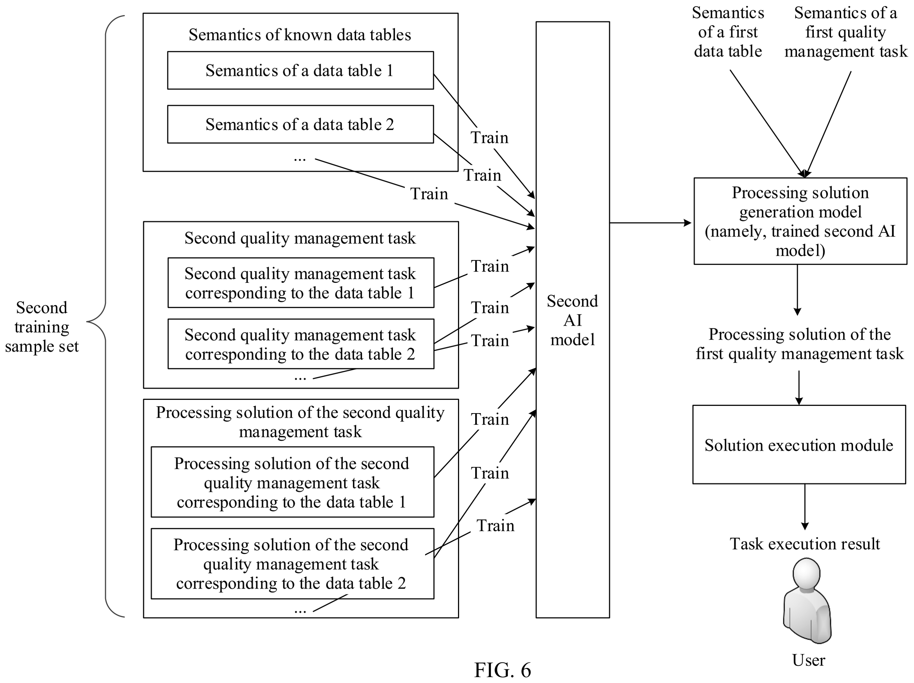

Specifically, as shown in FIG. 6, a solution execution module in the computing device may execute the processing solution of the first quality management task to obtain the task execution result.

S406: The computing device feeds back the task execution result to the user.

The computing device may send the task execution result to the data quality management client application on the terminal device 100 through the network device 200, and the data quality management client application presents the task execution result to the user.

After the computing device feeds back the task execution result to the user, the user may check whether the task execution result is accurate. When determining that the task execution result is inaccurate, the user may modify the task execution result. The computing device may obtain a task execution result modified by the user, and then fine-tune the processing solution generation model by using the modified task execution result, to obtain a fine-tuned processing solution generation model. In this way, precision of the processing solution generation model can be continuously improved.

Fine-tuning the processing solution generation model may be understood as performing reinforcement learning (reinforcement learning and hyperparameter optimization feedback, RLHF) on the processing solution generation model. A reinforcement learning algorithm may be a proximal policy optimization (proximal policy optimization, PPO) algorithm, a policy gradient reinforcement learning (policy gradient reinforcement learning) algorithm, or the like.

In a possible implementation, after the processing solution generation model outputs the processing solution of the first quality management task, the computing device may alternatively provide the processing solution for the user. The user may check whether the processing solution is accurate. When determining that the processing solution is inaccurate, the user may modify the processing solution. The computing device may obtain a processing solution modified by the user, and then fine-tune the processing solution generation model by using the modified processing solution, to obtain a fine-tuned processing solution generation model. In this way, precision of the processing solution generation model can be further improved.

In conclusion, according to the data quality management method and the computing device provided in this application, the first data table input or selected by the user and the first quality management task input or selected by the user are obtained, then the semantics of the first data table and the first quality management task are input into the processing solution generation model to obtain the processing solution of the first quality management task, the processing solution is executed to obtain the task execution result, and finally the task execution result is fed back to the user, to implement quality management on the first data table of the user. It can be learned that in the method, the user only needs to enter or select, on the computing device, a data table on which data quality management is to be performed, and enter or select a data quality management task on the computing device, and the computing device performs quality management on the data table based on the data quality management task input or selected by the user, and feeds back a quality management result to the user, so that efficiency of data quality management can be improved.

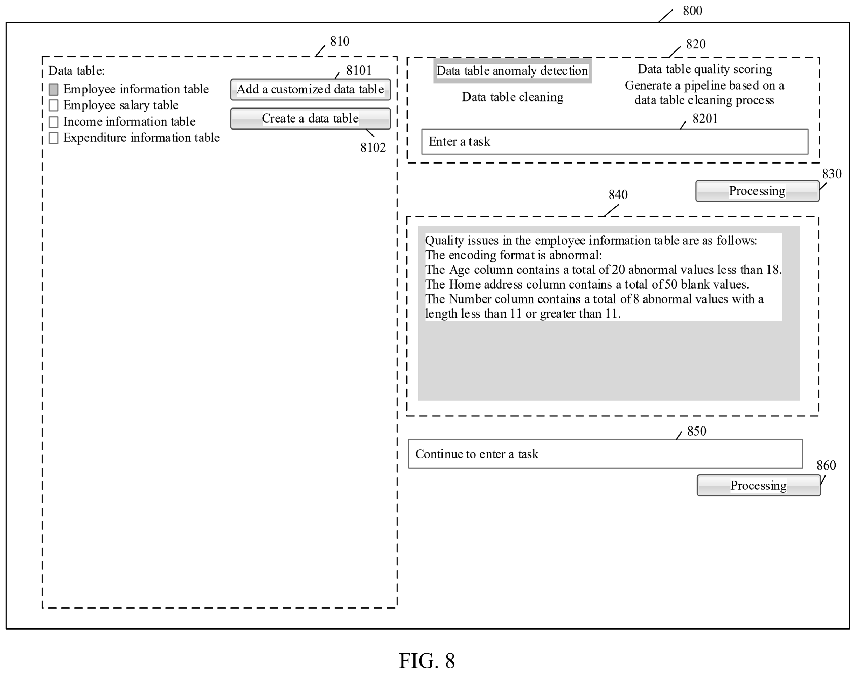

To facilitate understanding of beneficial effects of the solutions provided in embodiments of this application, the following describes some example graphical user interfaces in steps S401 to S406. FIG. 8 shows an example graphical user interface 800 according to this application. The interface may be a console of the cloud data center 300. It can be learned from FIG. 8 that, the interface 800 may include a data table selection and input area 810, a task selection and input area 820, a processing control 830, and a result display and editing area 840.

The data table selection and input area 810 may display, to the user, a plurality of data tables stored by the user in the cloud data center 300, for example, an "Employee information table", an "Employee salary table", an "Income information table", and an "Expenditure information table" in FIG. 8. The user may select some of the data tables for data quality management. The data table selection and input area 810 may further provide an interface for the user to customize a data table, for example, an "Add a customized data table" control 8101 in FIG. 8, where the user may upload a customized data table after touching or clicking the control; and for example, a "Create a data table" control 8102 in FIG. 8, where the user may create and edit a data table after touching or clicking the control.

The task selection and input area 820 may display some data quality management tasks to the user, for example, "Data table anomaly detection", "Data table quality scoring", "Data table cleaning", and "Generate a pipeline based on a data table cleaning step" in FIG. 8. The user may select some of these tasks as target quality management tasks. The task selection and input area 820 may further provide an interface for the user to customize a task, for example, an "Enter a task" text box 8201 in FIG. 8. The user may enter a quality management task in the text box, and upload the entered quality management task.

The processing control 830 may receive a user operation, for example, a click or touch operation. In response to the user operation, the cloud data center 300 may obtain, through the interface 800, a data table and a quality management task that are selected or entered by the user, and execute the method embodiment shown in FIG. 4 to process the task to obtain a task execution result and feed back the task execution result to the user. For example, the task execution result includes quality issues in the employee information table displayed in the result display and editing area 840 shown in FIG. 8.

Optionally, after viewing the task execution result, the user may continue to enter a new quality management task for quality management. For example, the interface 800 shown in FIG. 8 includes a "Continue to enter a task" text box 850. The user may enter the new quality management task in the text box, and upload the new task. As shown in FIG. 8, the interface 800 further includes a processing control 860. A function of the control is similar to a function of the processing control 830. For details, refer to the foregoing related descriptions. For brevity of the specification, details are not described herein again.

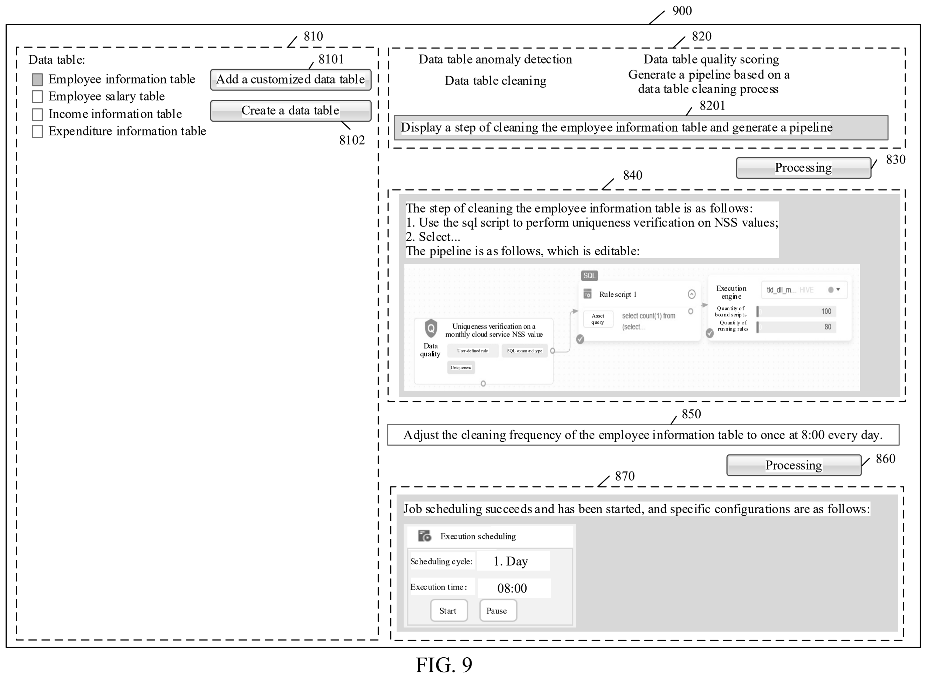

FIG. 9 shows a graphical user interface 900 according to this application. The interface 900 may be based on a quality management task "Display a step of cleaning the employee information table and generate a pipeline" entered by the user in an "Enter a task" text box 8201, and is used to execute the method embodiment shown in FIG. 4 to process the task to obtain a corresponding task execution result and feed back the task execution result to the user. For example, the task execution result includes cleaning steps and a pipeline that are displayed in a result display and editing area 840 shown in FIG. 9.

Optionally, the user may further modify the task execution result in the result display and editing area 840. As shown in FIG. 9, the user may modify the cleaning steps and drag/edit the pipeline in the result display and editing area 840.

Optionally, the user may further perform quality management job configuration on the interface 900. As shown in FIG. 9, the user may continue to enter a task "Adjust the cleaning frequency of the employee information table to once at 8:00 every day" on the interface 900. The cloud data center 300 may obtain, through the interface 900, the task input by the user, and execute the method embodiment shown in FIG. 4 to process the task to obtain a corresponding task execution result and feed back the task execution result to the user. For example, the task execution result includes a prompt indicating that scheduling succeeds that is displayed in a result display and editing area 870 shown in FIG. 9.

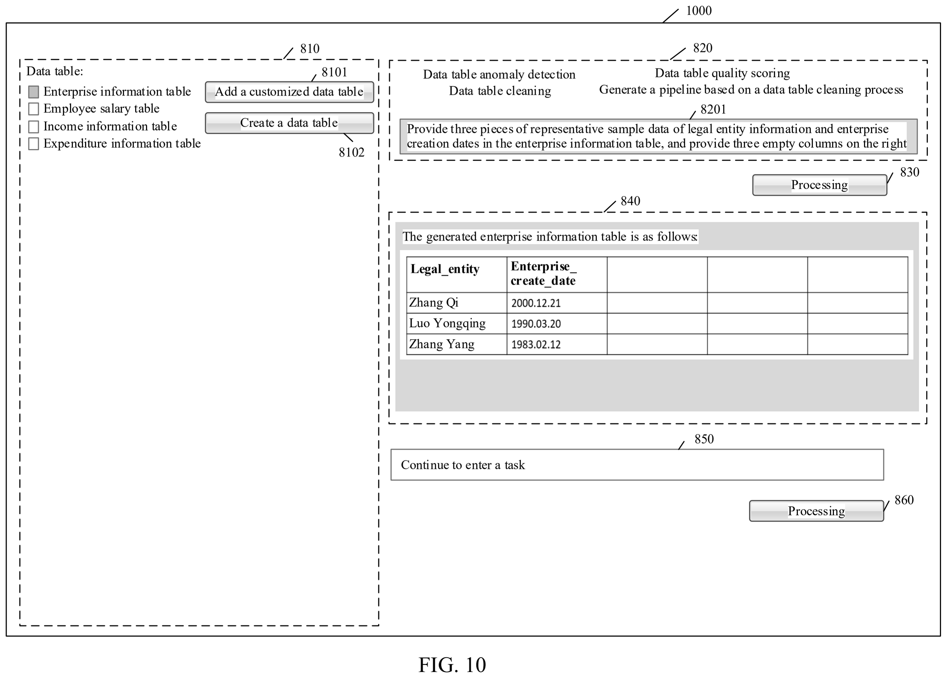

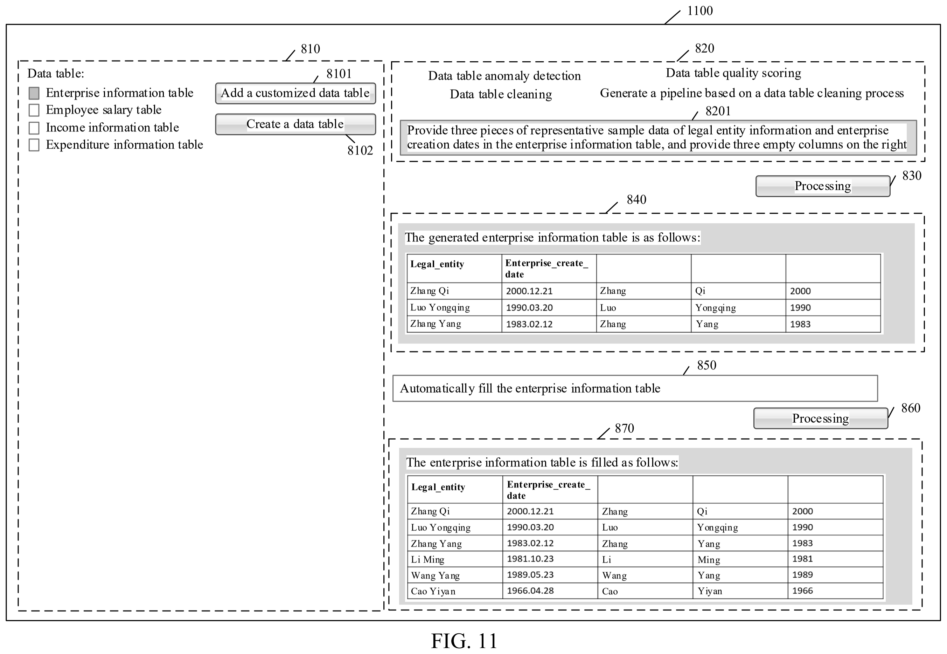

FIG. 10 shows a graphical user interface 1000 according to this application. The interface 1000 may be based on a quality management task "Provide three pieces of representative sample data of legal entity information and an enterprise creation date in the enterprise information table (an empty table), and provide three empty columns on the right" entered by the user. The cloud data center 300 may obtain, through the interface 1000, the task entered by the user, and execute the method embodiment shown in FIG. 4 to process the task to obtain a corresponding task execution result and feed back the task execution result to the user. For example, the task execution result includes an enterprise information table displayed in a result display and editing area 840 shown in FIG. 10. The user may modify content in the enterprise information table. As shown in FIG. 11, the user fills content "Zhang", "Qi", "2000", "Luo", "Yongqing", "1990", "Zhang", "Yang", and "1983" in the three empty columns of the enterprise information table displayed in the result display and editing area 840. The user may continue to enter a task "Automatically fill data in the data table 1 into the enterprise information table". The cloud data center 300 continues to obtain, through the interface 1000, the task entered by the user, and execute the method embodiment shown in FIG. 4 to process the task to obtain a corresponding task execution result and feed back the task execution result to the user. For example, the task execution result includes a filled enterprise information table displayed in a result display and editing area 870 on the interface 1100 shown in FIG. 11.

It should be understood that FIG. 8 to FIG. 11 are merely used as examples for description. This is not specifically limited in this application.

It can be learned from FIG. 8 to FIG. 11 that, according to the data quality management method provided in this application, quality management can be quickly performed on the data table of the user, and efficiency of data quality management can be improved.

It may be understood that an idea of the technical solutions provided in this application may also be used in a scenario in which another management operation (for example, data preparation, data integration, or directory generation) is performed on the data table of the user. Data preparation means obtaining unstructured data and structuring the data, which is simply understood as structuring the data into a two-dimensional table form of rows and columns like a table, for ease of use. Data integration means organically centralizing data tables of different sources, formats, and characteristics logically or physically to provide comprehensive data sharing for enterprises. Directory generation means generating an ordered list of data table assets of the user.

A directory generation scenario is used as an example. The cloud data center 300 may obtain data table assets of the user, then obtain a quality management task, for example, "generate a directory", entered by the user, then sort the data table assets of the user based on the task "generate a directory" to generate a corresponding directory, and then feed back the generated directory to the user.

A data preparation scenario is used as an example. The cloud data center 300 may obtain unstructured data of the user, then obtain a quality management task, for example, "prepare data", entered by the user, then structure the unstructured data of the user based on the task "prepare data", and then feed back the structured data to the user.

It should be noted that the foregoing is described by using an example in which the technical solutions provided in this application are used to perform quality management on the data table of the user. During specific implementation, the technical solutions provided in this application may also be used in a scenario in which quality management is performed on graphics data of the user. In this scenario, a process of performing quality management on the graphics data of the user is similar to the foregoing process of performing quality management on the data table of the user. During actual implementation, reference may be made to the foregoing process of performing quality management on the data table of the user. For brevity of the specification, details are not described herein again.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the data quality management method provided in this application. Based on a same inventive concept, the following continues to describe a data quality management apparatus and a computing device cluster provided in this application.

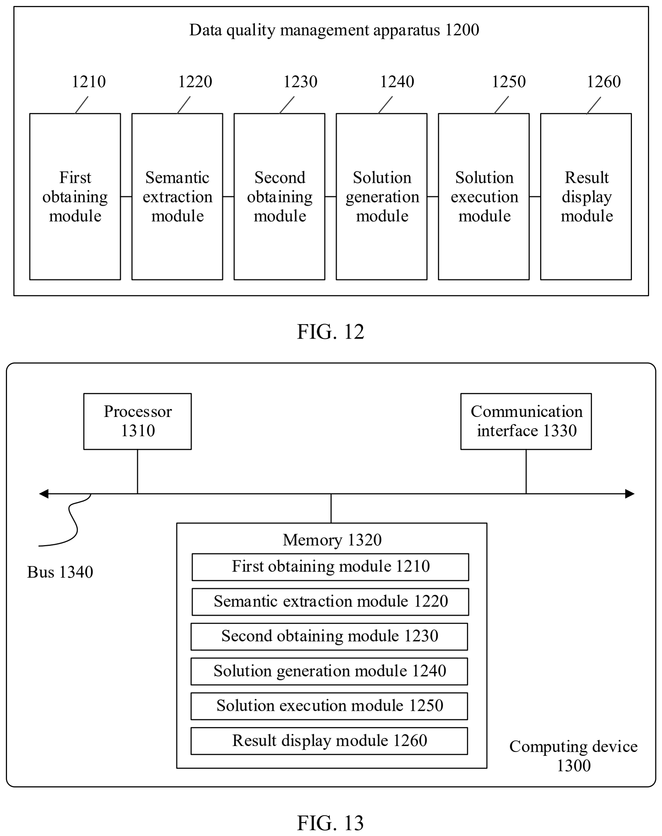

FIG. 12 is a diagram of a structure of a data quality management apparatus 1200 according to this application. The data quality management apparatus 1200 may be used in the cloud system shown in FIG. 2, and may be specifically used in the terminal device 100 or the computing device in the cloud data center 300 shown in FIG. 2.

As shown in FIG. 12, the data quality management apparatus 1200 includes a first obtaining module 1210, a semantic extraction module 1220, a second obtaining module 1230, a solution generation module 1240, a solution execution module 1250, and a result display module 1260. The following describes functions of the modules of the data quality management apparatus 1200 by using examples. It should be understood that functions of the modules described in the following examples are merely functions that the data quality management apparatus 1200 may have in some embodiments of this application, and the functions of the modules are not limited in this application.

A first obtaining module is configured to obtain a first data table input or selected by a user.

A semantic extraction module is configured to: input the first data table into a data table semantic extraction model, and use semantics output by the data table semantic extraction model as semantics of the first data table.

A second obtaining module is configured to obtain a first quality management task of the first data table input or selected by the user.

A solution generation module is configured to: input the semantics of the first data table and the first quality management task into a processing solution generation model, and use a processing solution output by the processing solution generation model as a processing solution of the first quality management task, where the processing solution generation model is obtained by training an AI model by using semantics of a known data table, a second quality management task of the known data table, and a processing solution of the second quality management task.

A solution execution module is configured to execute the processing solution of the first quality management task, to obtain a task execution result.

A result display module is configured to feed back the task execution result to the user.

In a possible embodiment, the apparatus 1200 further includes a semantic display module, a third obtaining module, and a first fine-tuning module, which are not shown in FIG. 12. The semantic display module is configured to provide the semantics of the first data table for the user. The third obtaining module is configured to obtain user-edited semantics of the first data table. The first fine-tuning module is configured to fine-tune the data table semantic extraction model by using the edited semantics of the first data table, to obtain a fine-tuned data table semantic extraction model.

In a possible embodiment, the apparatus 1200 further includes a solution display module, a fourth obtaining module, and a second fine-tuning module, which are not shown in FIG. 12. The solution display module is configured to provide the processing solution of the first quality management task for the user. The fourth obtaining module is configured to obtain a user-edited processing solution of the first quality management task. The second fine-tuning module is configured to fine-tune the processing solution generation model by using the edited processing solution of the first quality management task, to obtain a fine-tuned processing solution generation model.

In a possible embodiment, the apparatus 1200 further includes a fifth obtaining module and a third fine-tuning module, which are not shown in FIG. 12. The fifth obtaining module is configured to obtain a user-edited task execution result. The third fine-tuning module is configured to fine-tune the processing solution generation model by using the edited task execution result, to obtain a fine-tuned processing solution generation model.

In a possible embodiment, the first quality management task includes any one or more of the following: performing anomaly detection on the first data table; scoring quality of the first data table; cleaning the first data table; generating code, a rule, an operator, or a script used to perform anomaly detection on the first data table; generating code, a rule, an operator, or a script used to score the quality of the first data table; and generating code, a rule, an operator, a script, a step, or a pipeline used to clean the first data table.

In a possible embodiment, the processing solution of the first quality management task includes any one or more of the following: the code, rule, operator, or script used to perform anomaly detection on the first data table; the code, rule, operator, or script used to score the quality of the first data table; and the code, rule, operator, script, step, or pipeline used to clean the first data table.

During specific implementation, the first obtaining module 1210, the semantic extraction module 1220, the second obtaining module 1230, the solution generation module 1240, the solution execution module 1250, and the result display module 1260 may all be implemented by using software, or may be implemented by using hardware. When the modules are implemented by using software, the data quality management apparatus 1200 may be deployed in the data quality management serving end application shown in FIG. 2. When the modules are implemented by using hardware, the data quality management serving end application shown in FIG. 2 may call these hardware modules to implement a data quality management service.

For example, the following uses the solution generation module 1240 as an example to describe an implementation of the solution generation module 1240. Similarly, for implementations of the first obtaining module 1210, the semantic extraction module 1220, the second obtaining module 1230, the solution execution module 1250, and the result display module 1260, refer to the implementation of the solution generation module 1240.

A module is used as an example of a software functional unit, and the solution generation module 1240 may include code that runs on a compute instance. The compute instance may include at least one of a physical host (a computing device), a virtual machine, and a container. Further, there may be one or more compute instances. For example, the solution generation module 1240 may include code that runs on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region or between VPCs in different regions. Interconnection between VPCs is implemented through the communication gateway.

A module is used as an example of a hardware functional unit, and the solution generation module 1240 may include at least one computing device, for example, a server. Alternatively, the solution generation module 1240 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

When the solution generation module 1240 includes a plurality of computing devices, the included plurality of computing devices may be distributed in a same region, or may be distributed in different regions. The plurality of computing devices included in the solution generation module 1240 may be distributed in a same AZ, or may be distributed in different AZs. Similarly, the plurality of computing devices included in the solution generation module 1240 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the solution generation module 1240 may be configured to perform any step in the data quality management method shown in FIG. 4, the first obtaining module 1210 may be configured to perform any step performed in the data quality management method shown in FIG. 4, the second obtaining module 1230 may be configured to perform any step in the data quality management method shown in FIG. 4, the semantic extraction module 1220 may be configured to perform any step performed in the data quality management method shown in FIG. 4, the solution execution module 1250 may be configured to perform any step performed in the data quality management method shown in FIG. 4, and the result display module 1260 may be configured to perform any step in the data quality management method shown in FIG. 4. Steps that the first obtaining module 1210, the semantic extraction module 1220, the second obtaining module 1230, the solution generation module 1240, the solution execution module 1250, and the result display module 1260 are responsible for implementing may be specified as required, and the first obtaining module 1210, the semantic extraction module 1220, the second obtaining module 1230, the solution generation module 1240, the solution execution module 1250, and the result display module 1260 respectively implement different steps in the data quality management method shown in FIG. 4, to implement all functions of the data quality management apparatus 1200.

This application further provides a computing device 1300. The data quality management apparatus 1200 shown in FIG. 12 may be deployed on the computing device 1300. Operations and/or functions of modules in the computing device 1300 are separately used to implement corresponding steps in the data quality management method shown in FIG. 4.

As shown in FIG. 13, the computing device 1300 includes a processor 1310, a memory 1320, and a communication interface 1330. The processor 1310, the memory 1320, and the communication interface 1330 are connected to each other through a bus 1340.

The processor 1310 may read program code (including instructions) stored in the memory 1320, and execute the program code stored in the memory 1320, so that the computing device 1300 performs the data quality management method shown in FIG. 4, or the computing device 1300 deploys the data quality management apparatus 1200.

The processor 1310 may have a plurality of specific implementation forms, for example, a CPU or a combination of a CPU and a hardware chip. The hardware chip may be an ASIC, a PLD, or a combination thereof. The PLD may be a CPLD, an FPGA, GAL, or any combination thereof. The processor 1310 executes various types of digital storage instructions, for example, software or firmware programs stored in the memory 1320, to cause the computing device 1300 to provide various services.

The memory 1320 is configured to store program code, and the processor 1310 controls execution of the program code. The program code may include one or more software modules, and the one or more software modules may be the software module provided in the embodiment in FIG. 12, for example, the first obtaining module 1210, the semantic extraction module 1220, the second obtaining module 1230, the solution generation module 1240, the solution execution module 1250, and the result display module 1260.

The memory 1320 may include a volatile memory (volatile memory), for example, a random access memory (random access memory, RAM). The memory 1320 may alternatively include a nonvolatile memory (nonvolatile memory), for example, a read-only memory (read-only memory, ROM), a flash memory (flash memory), a hard disk drive (hard disk drive, HDD), or a solid-state drive (solid-state drive, SSD). The memory 1320 may alternatively include a combination of the foregoing types.

The communication interface 1330 may be a wired interface (for example, an Ethernet interface, an optical fiber interface, or an interface of another type (for example, an infiniBand interface)) or a wireless interface (for example, a cellular network interface or a wireless local area network interface), and is used to communicate with another computing device or apparatus. The communication interface 1330 may use a protocol suite above a transmission control protocol/internet protocol (transmission control protocol/internet protocol, TCP/IP), for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 1340 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 1340 may be classified into an address bus, a data bus, a control bus, and the like. In addition to a data bus, the bus 1340 may further include a power bus, a control bus, a status signal bus, and the like. However, for clear description, various types of buses in the figures are marked as the bus 1340. For ease of representation, only one bold line represents the bus in FIG. 13, but this does not mean that there is only one bus or only one type of bus.

The computing device 1300 is configured to perform the data quality management method shown in FIG. 4. For a specific implementation process of the computing device 1300, refer to the foregoing method embodiment. Details are not described herein again.

It should be understood that the computing device 1300 is merely an example provided in this application. In addition, the computing device 1300 may have more or fewer components than those shown in FIG. 13, may combine two or more components, or may have different component configurations.

This application further provides a computing device cluster 1400. The data quality management apparatus 1200 shown in FIG. 12 may be deployed on the computing device cluster 1400. Operations and/or functions of modules in the computing device cluster 1400 are separately used to implement corresponding steps in the data quality management method shown in FIG. 4.

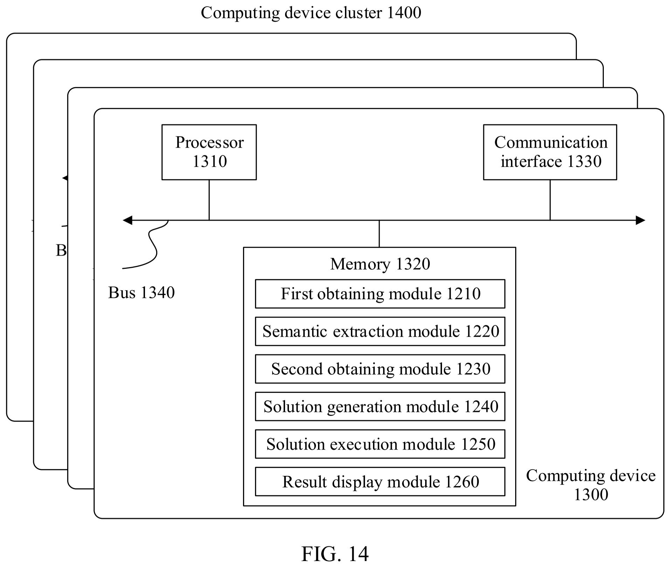

As shown in FIG. 14, the computing device cluster 1400 includes at least one computing device 1300. The memory 1320 in one or more computing devices 1300 in the computing device cluster may store same instructions for performing the data quality management method shown in FIG. 4. The computing device 1300 may be a server, for example, a central server, an edge server, or a local server in a local data center. In some embodiments, the computing device 1300 may alternatively be a terminal device, for example, a desktop computer, a notebook computer, or a smartphone.

In some possible implementations, the memory 1320 in the one or more computing devices 1300 in the computing device cluster 1400 may alternatively separately store a part of instructions for performing the data quality management method shown in FIG. 4. In other words, a combination of the one or more computing devices 1300 may jointly execute the instructions for performing the data quality management method shown in FIG. 4.

It should be noted that memories 1320 in different computing devices 1300 in the computing device cluster 1400 may store different instructions respectively used to execute a part of functions of the data quality management apparatus 1200. In other words, the instructions stored in the memories 1320 in the different computing devices 1300 may implement functions of one or more of the first obtaining module 1210, the semantic extraction module 1220, the second obtaining module 1230, the solution generation module 1240, the solution execution module 1250, and the result display module 1260.

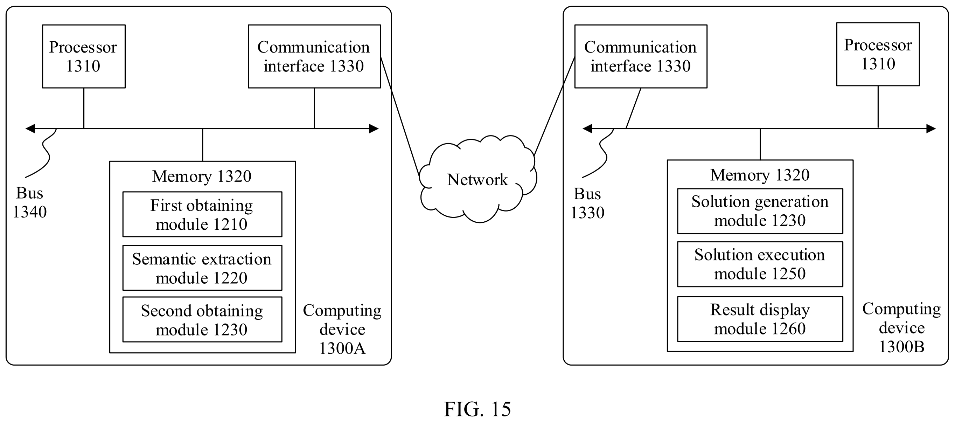

In some possible implementations, the one or more computing devices 1300 in the computing device cluster 1400 may be connected through a network. The network may be a wide area network, a local area network, or the like. FIG. 15 shows a possible implementation. As shown in FIG. 15, two computing devices 1300A and 1300B are connected through a network. Specifically, each computing device is connected to the network through a communication interface of the computing device. In this type of possible implementation, a memory 1320 in the computing device 1300A stores instructions for executing functions of the first obtaining module 1210, the semantic extraction module 1220, and the second obtaining module 1230. In addition, a memory 1320 in the computing device 1300B stores instructions for executing functions of the solution generation module 1240, the solution execution module 1250, and the result display module 1260.

A manner of connection in the computing device cluster 1400 shown in FIG. 15 may be provided in consideration that data quality management needs to be performed on a large quantity of data tables in the data quality management method provided in this application. Therefore, it is considered that functions implemented by the solution generation module 1240, the solution execution module 1250, and the result display module 1260 are performed by the computing device 1300B.

It should be understood that functions of the computing device 1300A shown in FIG. 15 may alternatively be completed by a plurality of computing devices 1300. Similarly, functions of the computing device 1300B may alternatively be completed by a plurality of computing devices 1300.

This application further provides a computer program product including instructions. The computer program product may be software or a program product that includes the instructions and that can run on a computing device or be stored in any usable medium. When the computer program product runs on at least one computing device, the at least one computing device is caused to perform the data quality management method shown in FIG. 4.

This application further provides a computer-readable storage medium. The computer-readable storage medium may be any usable medium accessible by a computing device, or a data storage device, like a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive), or the like. The computer-readable storage medium includes instructions. The instructions indicate a computing device to perform the data quality management method shown in FIG. 4.

In the foregoing embodiments, the description of each embodiment has respective focuses. For a part that is not described in detail in an embodiment, refer to related descriptions in other embodiments.

All or a part of the foregoing embodiments may be implemented by using software, hardware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

**Claims**

1. A data quality management method, wherein the method comprises:

   obtaining, by a computing device, a first data table input or selected by a user;
   inputting, by the computing device, the first data table into a data table semantic extraction model, and using semantics output by the data table semantic extraction model as semantics of the first data table;
   obtaining, by the computing device, a first quality management task of the first data table input or selected by the user;
   inputting, by the computing device, the semantics of the first data table and the first quality management task into a processing solution generation model, and using a processing solution output by the processing solution generation model as a processing solution of the first quality management task, wherein the processing solution generation model is obtained by training an artificial intelligence AI model by using semantics of a known data table, a second quality management task of the known data table, and a processing solution of the second quality management task;
   executing, by the computing device, the processing solution of the first quality management task, to obtain a task execution result; and
   feeding back, by the computing device, the task execution result to the user.

2. The method according to claim 1, wherein the method further comprises:

   providing, by the computing device, the semantics of the first data table for the user;
   obtaining, by the computing device, user-edited semantics of the first data table; and
   fine-tuning, by the computing device, the data table semantic extraction model by using the edited semantics of the first data table, to obtain a fine-tuned data table semantic extraction model.

3. The method according to claim 1 or 2, wherein the method further comprises:

   providing, by the computing device, the processing solution of the first quality management task for the user;
   obtaining, by the computing device, a user-edited processing solution of the first quality management task; and
   fine-tuning, by the computing device, the processing solution generation model by using the edited processing solution of the first quality management task, to obtain a fine-tuned processing solution generation model.

4. The method according to any one of claims 1 to 3, wherein the method further comprises:

   obtaining, by the computing device, a user-edited task execution result; and
   fine-tuning, by the computing device, the processing solution generation model by using the edited task execution result, to obtain a fine-tuned processing solution generation model.

5. The method according to any one of claims 1 to 4, wherein the first quality management task comprises any one or more of the following:

   performing anomaly detection on the first data table;
   scoring quality of the first data table;
   cleaning the first data table;
   generating code, a rule, an operator, or a script used to perform anomaly detection on the first data table;
   generating code, a rule, an operator, or a script used to score the quality of the first data table; and
   generating code, a rule, an operator, a script, a step, or a pipeline used to clean the first data table.

6. The method according to any one of claims 1 to 5, wherein the processing solution of the first quality management task comprises any one or more of the following:

   the code, rule, operator, or script used to perform anomaly detection on the first data table;
   the code, rule, operator, or script used to score the quality of the first data table; and
   the code, rule, operator, script, step, or pipeline used to clean the first data table.

7. A data quality management apparatus, wherein the apparatus comprises:

   a first obtaining module, configured to obtain a first data table input or selected by a user;
   a semantic extraction module, configured to: input the first data table into a data table semantic extraction model, and use semantics output by the data table semantic extraction model as semantics of the first data table;
   a second obtaining module, configured to obtain a first quality management task of the first data table input or selected by the user;
   a solution generation module, configured to: input the semantics of the first data table and the first quality management task into a processing solution generation model, and use a processing solution output by the processing solution generation model as a processing solution of the first quality management task, wherein the processing solution generation model is obtained by training an AI model by using semantics of a known data table, a second quality management task of the known data table, and a processing solution of the second quality management task;
   a solution execution module, configured to execute the processing solution of the first quality management task, to obtain a task execution result; and
   a result display module, configured to feed back the task execution result to the user.

8. The apparatus according to claim 7, wherein the apparatus further comprises:

   a semantic display module, configured to provide the semantics of the first data table for the user;
   a third obtaining module, configured to obtain user-edited semantics of the first data table; and
   a first fine-tuning module, configured to fine-tune the data table semantic extraction model by using the edited semantics of the first data table, to obtain a fine-tuned data table semantic extraction model.

9. The apparatus according to claim 7 or 8, wherein the apparatus further comprises:

   a solution display module, configured to provide the processing solution of the first quality management task for the user;
   a fourth obtaining module, configured to obtain a user-edited processing solution of the first quality management task; and
   a second fine-tuning module, configured to fine-tune the processing solution generation model by using the edited processing solution of the first quality management task, to obtain a fine-tuned processing solution generation model.

10. The apparatus according to any one of claims 7 to 9, wherein the apparatus further comprises:

   a fifth obtaining module, configured to obtain a user-edited task execution result; and
   a third fine-tuning module, configured to fine-tune the processing solution generation model by using the edited task execution result, to obtain a fine-tuned processing solution generation model.

11. The apparatus according to any one of claims 7 to 10, wherein the first quality management task comprises any one or more of the following:

   performing anomaly detection on the first data table;
   scoring quality of the first data table;
   cleaning the first data table;
   generating code, a rule, an operator, or a script used to perform anomaly detection on the first data table;
   generating code, a rule, an operator, or a script used to score the quality of the first data table; and
   generating code, a rule, an operator, a script, a step, or a pipeline used to clean the first data table.

12. The apparatus according to any one of claims 7 to 11, wherein the processing solution of the first quality management task comprises any one or more of the following:

   the code, rule, operator, or script used to perform anomaly detection on the first data table;
   the code, rule, operator, or script used to score the quality of the first data table; and
   the code, rule, operator, script, step, or pipeline used to clean the first data table.

13. A computing device cluster, comprising at least one computing device, wherein each of the at least one computing device comprises a processor and a memory; and

a processor of the at least one computing device is configured to execute instructions stored in a memory of the at least one computing device, to cause the computing device cluster to perform the method according to any one of claims 1 to 6.

14. A computer-readable storage medium, comprising computer program instructions, wherein when the computer program instructions are executed by a computing device cluster, the computing device cluster performs the method according to any one of claims 1 to 6.

FIG. 1

Data quality management system

Data quality
management node

Data quality
management node

Data quality
management
serving end
application

Data quality
management
serving end
application

Virtualization service

Virtualization service

Hardware

Hardware

Cloud data center 300

200

200

Network device

100

100

Data quality
management
client application

Data quality
management
client application

Examples

Examples

FIG. 2

Cloud data
center 300

Purchase the data quality
management cloud service

Provide a data quality
management cloud service

User

Terminal
device 100

FIG. 3

S401

A computing device obtains a first data table input or selected by a user

S402

The computing device inputs the first data table into a data table semantic extraction model, and uses semantics output by the data table semantic extraction model as semantics of the first data table

S403

The computing device obtains a first quality management task input or selected by the user

S404

The computing device inputs the semantics of the first data table and the first quality management task into a processing solution generation model, and uses a processing solution output by the processing solution generation model as a processing solution of the first quality management task

S405

The computing device executes the processing solution of the first quality management task to obtain a task execution result

S406

The computing device feeds back the task execution result to the user

FIG. 4

FIG. 5

Semantics of known data tables

Semantics of a data table 1

Semantics of a data table 2

...

Second quality management task

Second quality management task corresponding to the data table 1

Second quality management task corresponding to the data table 2

...

Processing solution of the second quality management task

Processing solution of the second quality management task corresponding to the data table 1

Processing solution of the second quality management task corresponding to the data table 2

...

Second training sample set

Train

Train

Train

Train

Train

Train

Train

Train

Train

Second AI model

Semantics of a first data table

Semantics of a first quality management task

Processing solution generation model (namely, trained second AI model)

Processing solution of the first quality management task

Solution execution module

Task execution result

User

FIG. 6

EP 4 675 527 A1

EP 4 675 527 A1

FIG. 7

EP 4 675 527 A1

800

810

820

Data table:
- ▣ Employee information table
- ☐ Employee salary table
- ☐ Income information table
- ☐ Expenditure information table

8101

Add a customized data table

Create a data table

8102

Data table anomaly detection

Data table quality scoring
Generate a pipeline based on a
data table cleaning process

Data table cleaning

8201

Enter a task

830

840

Processing

Quality issues in the employee information table are as follows:
The encoding format is abnormal:
The Age column contains a total of 20 abnormal values less than 18.
The Home address column contains a total of 50 blank values.
The Number column contains a total of 8 abnormal values with a
length less than 11 or greater than 11.

850

Continue to enter a task

860

Processing

FIG. 8

FIG. 9

810

Data table:
- ■ Employee information table
- □ Employee salary table
- □ Income information table
- □ Expenditure information table

8101
[ Add a customized data table ]

[ Create a data table ]
8102

820

Data table anomaly detection     Data table quality scoring

Data table cleaning     Generate a pipeline based on a data table cleaning process

8201
Display a step of cleaning the employee information table and generate a pipeline

[ Processing ] 830

840

The step of cleaning the employee information table is as follows:
1. Use the sql script to perform uniqueness verification on NSS values;
2. Select...
The pipeline is as follows, which is editable:

SQL

Rule script 1

Execution engine    tld_dll_m... HIVE

Asset query   select count(1) from (select...

Quantity of bound scripts   100
Quantity of running rules   80

Uniqueness verification on a monthly cloud service NSS value

Data quality   User-defined rule   SQL command type

Uniqueness

850
Adjust the cleaning frequency of the employee information table to once at 8:00 every day.

[ Processing ] 860

870

Job scheduling succeeds and has been started, and specific configurations are as follows:

Execution scheduling

Scheduling cycle:   1. Day

Execution time:   08:00

[ Start ]   [ Pause ]

900

FIG. 9

EP 4 675 527 A1

1000

810

Data table:

■ Enterprise information table  [ Add a customized data table ] 8101
□ Employee salary table
□ Income information table  [ Create a data table ] 8102
□ Expenditure information table

820

Data table anomaly detection　　　　　Data table quality scoring
Data table cleaning　　　　Generate a pipeline based on a data table cleaning process

8201

Provide three pieces of representative sample data of legal entity information and enterprise creation dates in the enterprise information table, and provide three empty columns on the right

[ Processing ] 830

840

The generated enterprise information table is as follows:

| Legal_entity | Enterprise_ create_date | | | |
|---|---|---|---|---|
| Zhang Qi | 2000.12.21 | | | |
| Luo Yongqing | 1990.03.20 | | | |
| Zhang Yang | 1983.02.12 | | | |

850

Continue to enter a task

[ Processing ] 860

FIG. 10

EP 4 675 527 A1

1100

810

Data table:

☐ Enterprise information table    [ Add a customized data table ]  8101

☐ Employee salary table

☐ Income information table        [ Create a data table ]

☐ Expenditure information table                                    8102

820

Data table anomaly detection          Data table quality scoring

Data table cleaning          Generate a pipeline based on a data table cleaning process

8201

Provide three pieces of representative sample data of legal entity information and enterprise creation dates in the enterprise information table, and provide three empty columns on the right

[ Processing ]  830

840

The generated enterprise information table is as follows:

| Legal_entity | Enterprise_create_date | | | |
|---|---|---|---|---|
| Zhang Qi | 2000.12.21 | Zhang | Qi | 2000 |
| Luo Yongqing | 1990.03.20 | Luo | Yongqing | 1990 |
| Zhang Yang | 1983.02.12 | Zhang | Yang | 1983 |

850

Automatically fill the enterprise information table

[ Processing ]  860

870

The enterprise information table is filled as follows:

| Legal_entity | Enterprise_create_date | | | |
|---|---|---|---|---|
| Zhang Qi | 2000.12.21 | Zhang | Qi | 2000 |
| Luo Yongqing | 1990.03.20 | Luo | Yongqing | 1990 |
| Zhang Yang | 1983.02.12 | Zhang | Yang | 1983 |
| Li Ming | 1981.10.23 | Li | Ming | 1981 |
| Wang Yang | 1989.05.23 | Wang | Yang | 1989 |
| Cao Yiyan | 1966.04.28 | Cao | Yiyan | 1966 |

FIG. 11

Data quality management apparatus 1200

1210　　　1220　　　1230　　　1240　　　1250　　　1260

| First obtaining module | Semantic extraction module | Second obtaining module | Solution generation module | Solution execution module | Result display module |
|---|---|---|---|---|---|

FIG. 12

Processor 1310

Communication interface 1330

Bus 1340

Memory 1320

First obtaining module 1210

Semantic extraction module 1220

Second obtaining module 1230

Solution generation module 1240

Solution execution module 1250

Result display module 1260

Computing device 1300

FIG. 13

Computing device cluster 1400

| | |
|---|---|
| Processor 1310 | Communication interface 1330 |

B

Bus 1340

Memory 1320

First obtaining module 1210

Semantic extraction module 1220

Second obtaining module 1230

Solution generation module 1240

Solution execution module 1250

Result display module 1260

Computing device 1300

FIG. 14

FIG. 15

EP 4 675 527 A1

## INTERNATIONAL SEARCH REPORT

| International application No. |
|---|
| **PCT/CN2024/080437** |

| A. | CLASSIFICATION OF SUBJECT MATTER |
|---|---|
| | G06Q10/0639(2023.01)i; G06F16/215(2019.01)i |

According to International Patent Classification (IPC) or to both national classification and IPC

| B. | FIELDS SEARCHED |
|---|---|

Minimum documentation searched (classification system followed by classification symbols)

IPC:G06Q10/-,G06F16/-

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, VCN, CNKI, ISI-Web of Sciecne: 数据表, 数据质量, 表, 清洗, 人工智能, 语义, 质量, "AI", sheet, table, data, quality, semantic, cleaning

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111427974 A (HUZHOU BIG-DATA OPERATION CO., LTD. et al.) 17 July 2020 (2020-07-17) <br> description, paragraphs 23-48 | 1-14 |
| A | CN 111177134 A (SHANGHAI TECHNOLOGY DEVELOPMENT CO., LTD.) 19 May 2020 (2020-05-19) <br> claims 1-10 | 1-14 |
| A | CN 114020770 A (SHENZHEN HUAYUN ZHONGSHENG TECHNOLOGY CO., LTD.) 08 February 2022 (2022-02-08) <br> claims 1-10 | 1-14 |
| A | CN 113326381 A (TOPWALK INFORMATION TECHNOLOGY CO., LTD.) 31 August 2021 (2021-08-31) <br> claims 1-10 | 1-14 |
| A | CN 115270759 A (BEIJING BAIDU NETCOM SCIENCE AND TECHNOLOGY CO., LTD.) 01 November 2022 (2022-11-01) <br> description, paragraphs 36-79 | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 May 2024** | **20 May 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :--- |
| **PCT/CN2024/080437** |

### C. DOCUMENTS CONSIDERED TO BE RELEVANT

| Category* | Citation of document, with indication, where appropriate, of the relevant passages | Relevant to claim No. |
| :---: | :--- | :---: |
| A | CN 115858751 A (SUNSHINE INSURANCE GROUP CO., LTD.) 28 March 2023 (2023-03-28)<br>claims 1-10 | 1-14 |
| A | US 2021209421 A1 (BEIJING BAIDU NETCOM SCIENCE AND TECHNOLOGY CO., LTD.) 08 July 2021 (2021-07-08)<br>claims 1-20 | 1-14 |
| A | US 2022164698 A1 (IBM) 26 May 2022 (2022-05-26)<br>claims 1-20 | 1-14 |

Form PCT/ISA/210 (second sheet) (July 2022)

## INTERNATIONAL SEARCH REPORT
### Information on patent family members

International application No.

**PCT/CN2024/080437**

| Patent document cited in search report | | | Publication date (day/month/year) | Patent family member(s) | | | Publication date (day/month/year) |
|---|---|---|---|---|---|---|---|
| CN | 111427974 | A | 17 July 2020 | None | | | |
| CN | 111177134 | A | 19 May 2020 | None | | | |
| CN | 114020770 | A | 08 February 2022 | None | | | |
| CN | 113326381 | A | 31 August 2021 | None | | | |
| CN | 115270759 | A | 01 November 2022 | None | | | |
| CN | 115858751 | A | 28 March 2023 | None | | | |
| US | 2021209421 | A1 | 08 July 2021 | EP | 3866028 | A2 | 18 August 2021 |
| | | | | EP | 3866028 | A3 | 20 October 2021 |
| | | | | JP | 2022003512 | A | 11 January 2022 |
| | | | | JP | 7296419 | B2 | 22 June 2023 |
| | | | | US | 11797607 | B2 | 24 October 2023 |
| | | | | KR | 20210042271 | A | 19 April 2021 |
| US | 2022164698 | A1 | 26 May 2022 | None | | | |

Form PCT/ISA/210 (patent family annex) (July 2022)

**REFERENCES CITED IN THE DESCRIPTION**

**Patent documents cited in the description**

- CN 202310395811

- CN 202310769133